# EUROPEAN PATENT SPECIFICATION

(11) **EP 1 930 235 B1**
(45) Date of publication and mention of the grant of the patent: **15.06.2011**
(21) Application number: 06025071.9
(22) Date of filing: 05.12.2006
(51) Int. Cl.: B62M 1/04

(54) **Pedalling device for bicycle**
Fahrradpedalvorrichtung
Dispositif de pédalage pour bicyclette

(43) Date of publication of application: 11.06.2008
(73) Proprietor: Ho Luen Corp., WuFeng Township, Taichung County (TW)
(72) Inventor: Wei, Yi-Pin c/o Ho Luen Corp., WuFeng Township Taichung County (TW)
(74) Representative: Reichel, Wolfgang

(56) References cited:
- EP-A- 0 963 905
- WO-A-03/084806
- FR-A1- 2 767 174
- JP-A- 4 087 893
- US-A- 4 577 879

## Description

The present invention relates to a pedalling device and, more particularly, to a pedalling device for a bicycle.

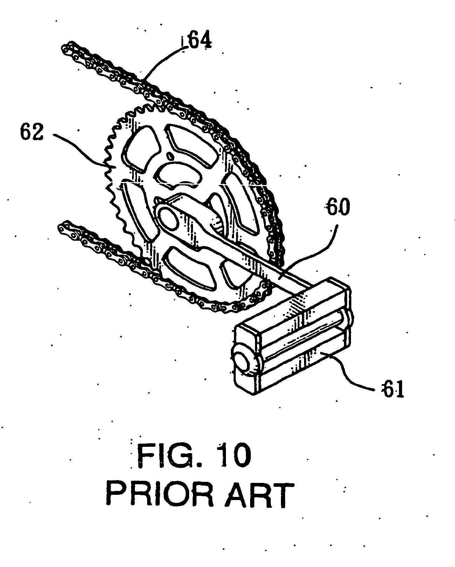

A conventional pedalling device for a bicycle in accordance with the prior art shown in Fig. 10 comprises a crank 60, two pedals 61, a chainwheel 62, and a chain 64. Thus, when the crank 60 is driven by the pedals 61, the chainwheel 62 is rotated by the crank 60 to drive the chain 64 so as to move the bicycle. However, the force arm defined between the center of the chainwheel 62 and each of the pedals 61 has a smaller length, so that the rider has to exert a larger stepping force on the pedals 61 so as to move the bicycle, thereby greatly wasting the rider's energy and manual work.

Document FRA 2767174 is considered the closest prior art disclosing the features of the preamble of claim 1.

The objective of the present invention is to provide a pedalling device, and more particular a pedalling device for a bicycle, wherein the rider can step the pedals in an energy-saving manner.

The above objective is achieved by the features of claim 1.

In accordance with the present invention, there is provided a pedalling device, comprising a support seat, a rotation shaft rotatably mounted on a first end of the support seat, a chainwheel secured on and rotated by the rotation shaft, two opposite oneway ratchet wheels each mounted on the rotation shaft to rotate the rotation shaft, two opposite drive members each having a first end formed with a ratchet socket mounted on a respective ratchet wheel to rotate the respective ratchet wheel in a oneway manner and a second end formed with on elongate slide track, a crank pivotally mounted on a second end of the support seat, two opposite drive shafts secured on two opposite sides of the crank to rotate the crank, two pedals each rotatably mounted on a respective drive shaft, and two opposite slide seats each pivotally mounted on a respective drive shaft to move therewith and each slidably mounted in the slide track of a respective drive member.

Advantageously, the drive members have a longer force arm between the crank and the chainwheel so as to increase the force moment of the pedalling device, thereby saving the rider's energy and manual work.

Further benefits and advantages of the present invention will become apparent after a careful reading of the detailed description with appropriate reference to the accompanying drawings.

In the drawings:
Fig. 1 is a perspective view of a pedalling device in accordance with the preferred embodiment of the present invention.
Fig. 2 is an exploded perspective view of the pedalling device as shown in Fig. 1.
Fig. 3 is a plan view of the pedalling device for a bicycle as shown in Fig. 1.
Fig. 4 is a plan cross-sectional view of the pedalling device as shown in Fig. 1.
Fig. 5 is a plan cross-sectional view of the pedalling device as shown in Fig. 1.
Fig. 6 is a plan cross-sectional operational view of the pedalling device as shown in Fig. 1.
Fig. 7 is a locally enlarged view of the pedalling device as shown in Fig. 6.
Fig. 8 is a schematic operational view of the pedalling device as shown in Fig. 6.
Fig. 9 is a schematic operational view of the pedalling device as shown in Fig. 7.
Fig. 10 is a perspective view of a conventional pedalling device for a bicycle in accordance with the prior art.

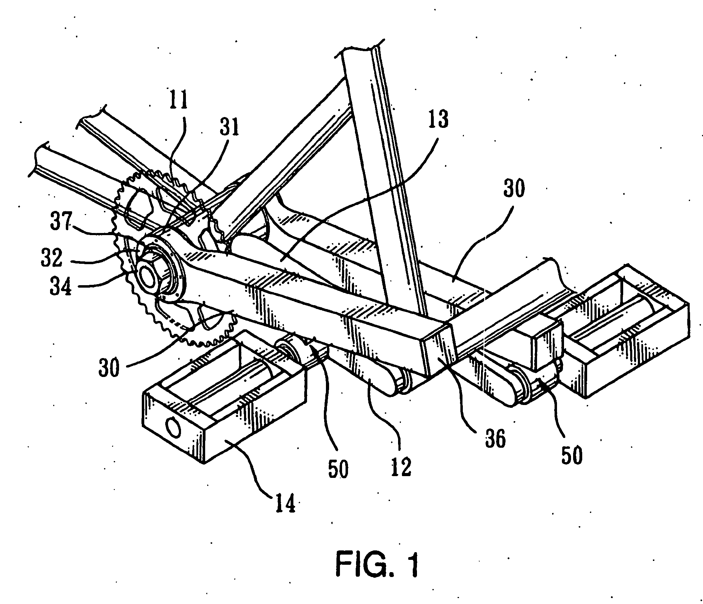

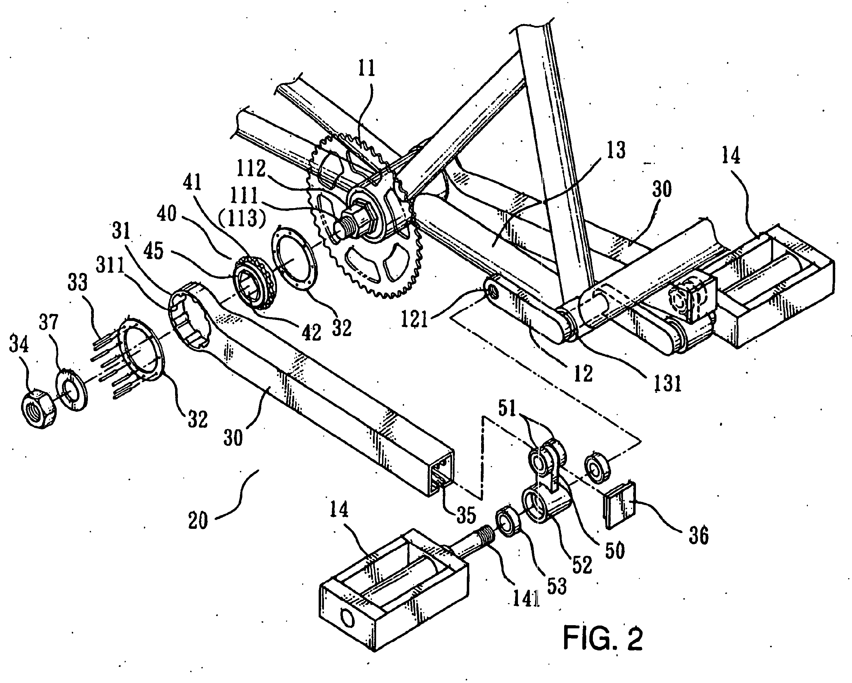

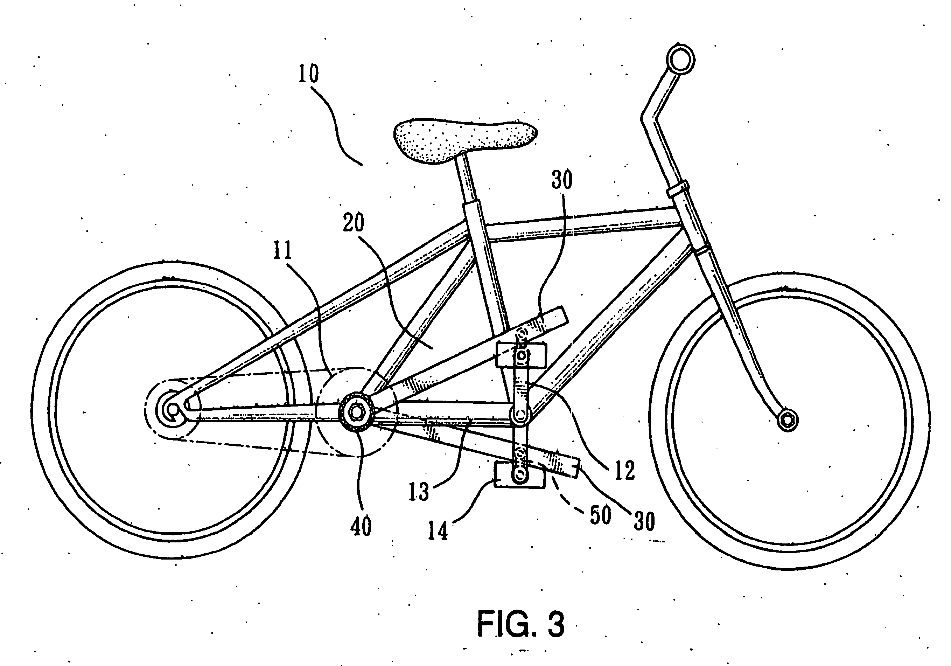

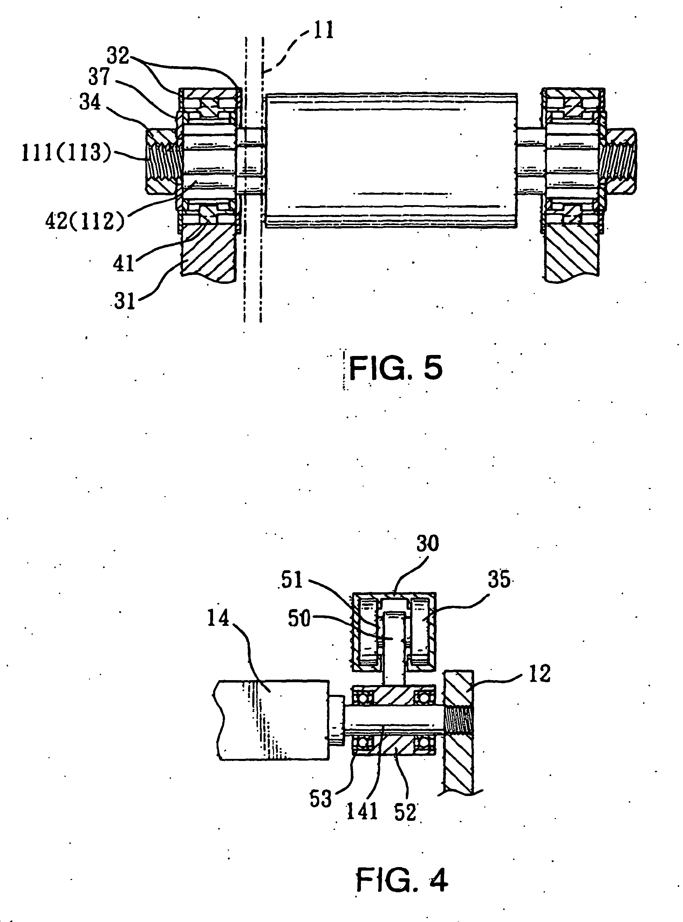

Referring to the drawings and initially to Figs. 1-7, a pedalling device 20 for a bicycle 10 in accordance with the preferred embodiment of the present invention comprises a support seat 13, a rotation shaft 111 rotatably mounted on a first end of the support seat 13, a chainwheel 11 secured on and rotated by the rotation shaft 111, two opposite oneway ratchet wheels 40 each mounted on the rotation shaft 111 to rotate the rotation shaft 111, two opposite drive members 30 each having a first end formed with a ratchet socket 31 mounted on a respective ratchet wheel 40 to rotate the respective ratchet wheel 40 in a oneway manner and a second end formed with an elongate slide track 35, a crank 12 pivotally mounted on a second end of the support seat 13, two opposite drive shafts 141 secured on two opposite sides of the crank 12 to rotate the crank 12, two pedals 14 each rotatably mounted on a respective drive shaft 141, and two opposite slide seats 50 each pivotally mounted on a respective drive shaft 141 to move therewith and each slidably mounted in the slide track 35 of a respective drive member 30.

The rotation shaft 111 has two opposite ends each formed with 5 hexagonal fixing stud 112 and a threaded rod 113.

Each of the ratchet wheels 40 includes an inner part 45 formed with a hexagonal fixing hole 42 secured on the fixing stud 112 of the rotation shaft 111 to rotate the rotation shaft 111, an outer part 43 rotatably mounted on the inner part 45 and having an outer wall formed with a driven gear 41 and an inner wall formed with a plurality of locking grooves 430, and a plurality of oneway detents 44 each having a first end pivotally mounted on the inner part 45 and a second end engaged in the respective locking groove 430 of the outer part 43.

The ratchet socket 31 of each of the drive members 30 has an inner wall formed with a drive gear 311 meshing with the driven gear 41 of the respective ratchet wheel 40 to rotate the respective ratchet wheel 40. The ratchet socket 31 of each of the drive members 30 is combined with the respective ratchet wheel 40 by two opposite seal rings 32 which are located at two opposite sides of the ratchet socket 31 of each of the drive members 30 and are fastened by a plurality of rivets 33.

The pedalling device 20 further comprises two washers 37 each mounted on a respective threaded rod 113 of the rotation shaft 111 and each rested on a respective ratchet wheel 40, and two nuts 34 each screwed onto a respective threaded rod 113 of the rotation shaft 111 and each rested on a respective washer 37.

The second end of the support seat 13 is formed with a pivot hole 131. The crank 12 is pivotally mounted in the pivot hole 131 of the support seat 13. Each of the two sides of the crank 12 has a distal end formed with a screw bore 121. Each of the two drive shafts 141 has a threaded distal end screwed into the respective screw bore 121 of the crank 12 to secure each of the drive shafts 141 to the crank 12.

Each of the two slide seats 50 has a first end provided with two first bearings 51 slidably mounted in the slide track 35 of the respective drive member 30 and a second end provided with a sleeve 52 for mounting two second bearings 53 which are pivotally mounted on the respective drive shaft 141. The first bearings 51 of each of the two slide seats 50 are limited in the slide track 35 of the respective drive member 30 by an end cap 36 which is mounted on an opened end of the slide track 35 to prevent the first bearings 51 of each of the two slide seats 50 from being detached from the slide track 35 of the respective drive member 30.

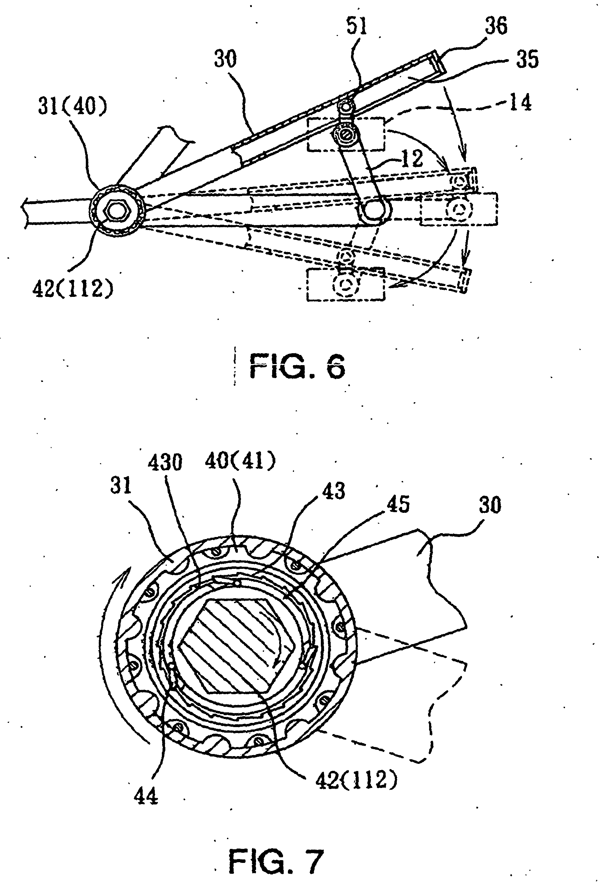

In operation, referring to Figs. 1-9, when the pedals 14 are stepped by the rider, the crank 12 is rotated to move the two slide seats 50 which are moved upward and downward to drive the drive members 30 to pivot upward and downward as shown in Fig. 6, so that the ratchet socket 31 of each of the drive members 30 is rotated to rotate the respective ratchet wheel 40.

As shown in Fig. 7, when one of the drive members 30 is pivoted downward, the respective ratchet wheel 40 is rotated clockwise to rotate the outer part 43. At this time, the oneway detents 44 of each of the ratchet wheels 40 are engaged in the locking grooves 430 of the outer part 43, so that the inner part 45 is driven and rotated by the outer part 43 to rotate the fixing hole 42 which rotates the fixing stud 112 of the rotation shaft 111 so as to rotate the rotation shaft 111. Thus, when the ratchet wheel 40 is rotated clockwise, the rotation shaft 111 is rotated to rotate the chainwheel 11 so as to move the bicycle.

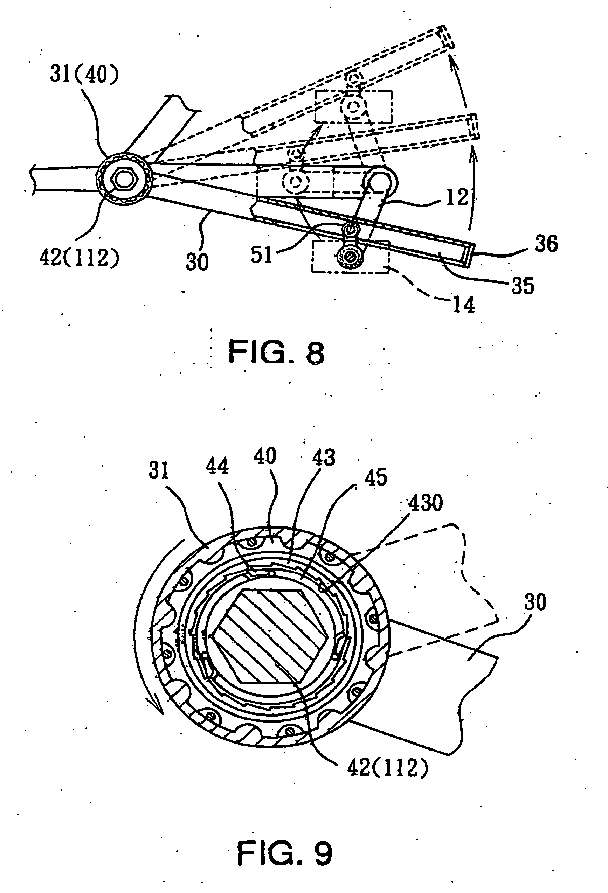

On the contrary, when one of the drive members 30 is pivoted upward as shown in Fig. 8, the respective ratchet wheel 40 is rotated counterclockwise to rotate the outer part 43 as shown in Fig. 9. At this time, the oneway detents 44 of each of the ratchet wheels 40 are disengaged from the locking grooves 430 of the outer part 43, so that the inner part 45 is not rotated by the outer part 43, and the outer part 43 performs an idle rotation. Thus, when the ratchet wheel 40 is rotated counterclockwise, the rotation shaft 111 stops rotating, so that the chainwheel 11 stops rotating.

In such a manner, when one of the drive members 30 is pivoted upward as shown in Fig. 8, the other one of the drive members 30 is pivoted downward as shown in Fig. 6, so that the chainwheel 11 is rotated successively so as to move the bicycle successively.

Accordingly, the drive members 30 have a longer force arm between the crank 12 and the chainwheel 11 so as to increase the force moment of the pedalling device 20 so that the rider can step the pedals 14 in an energy-saving manner, thereby saving the rider's energy and manual work.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A pedalling device, comprising:
a support seat (13);
a rotation shaft (111) rotatably mounted on a first end of the support seat (13);
a chainwheel (11) secured on and rotated by the rotation shaft (111);
two opposite oneway ratchet wheels (40) each mounted on the rotation shaft (111) to rotate the rotation shaft (111);
two opposite drive members (30) each having a first end formed with a ratchet socket (31) mounted on a respective ratchet wheel (40) to rotate the respective ratchet wheel (40) in a oneway manner and a second end formed with an elongate slide track (35);
a crank (12) pivotally mounted on a second end of the support seat (13);
two opposite drive shafts (141) secured on two opposite sides of the crank (12) to rotate the crank (12);
two pedals (14) each rotatably mounted on a respective drive shaft (141); and
two opposite slide seats (50) each pivotally mounted on a respective drive shaft (141) to move therewith and each slidably mounted in the slide track (35) of a respective drive member (30);
**characterized in that**
the rotation shaft (111) has two opposite ends each formed with a fixing stud (112) and a threaded rod (113), that each of the ratchet wheels (40) includes an inner part (45) formed with a fixing hole (42) secured on the fixing stud (112) of the rotation shaft (111) to rotate the rotation shaft (111) and an outer part (43) rotatably mounted on the inner part (45) and having an outer wall formed with a driven gear (41), that
the ratchet socket (31) of each of the drive members (30) has an inner wall formed with a drive gear (311) meshing with the driven gear (41) of the respective ratchet wheel (40) to rotate the respective ratchet wheel (40).

2. The pedalling device in accordance with claim 1,
**characterized in that**
the fixing studs (112) are hexagonal, and that fixing holes (42) are hexagonal.

3. The pedalling device in accordance with claim 2,
**characterized in that**
the pedalling device further comprises two washers (37) each mounted on a respective threaded rod (113) of the rotation shaft (111) and each rested on a respective ratchet wheel (40) and two nuts (34) each screwed onto a respective threaded rod (113) of the rotation shaft (111) and each rested on a respective washer (37).

4. The pedalling device in accordance with claim 2,
**characterized in that**
the ratchet socket (31) of each of the drive members (30) is combined with the respective ratchet wheel (40) by two opposite seal rings (32).

5. The pedalling device in accordance with claim 4,
**characterized in that**
the seal rings (32) are located at two opposite sides of the ratchet socket (31) of each of the drive members (30) and are fastened by a plurality of rivets (33).

6. The pedalling device in accordance with claim 1,
**characterized in that**
the each of the two slide seats (50) has a first end provided with two first bearings (51) slidably mounted in the slide track (35) of the respective drive member (30) and a second end provided with a sleeve (52) for mounting two second bearings (53) which are pivotally mounted on the respective drive shaft (141).

7. The pedalling device in accordance with claim 6,
**characterized in that**
the first bearings (51) of each of the two slide seats (50) are limited in the slide track (35) of the respective drive member (30) by an end cap (36) which is mounted on an opened end of the slide track (35) to prevent the first bearings (51) of each of the two slide seats (50) from being detached from the slide track (35) of the respective drive member (30).

8. The pedalling device in accordance with claim 1,
**characterized in that**
the second end of the support seat (13) is formed with a pivot hole (131), and that the crank (12) is pivotally mounted in the pivot hole (131) of the support seat (13).

9. The pedalling device in accordance with claim 1,
**characterized in that**
each of the two sides of the crank (12) has a distal end formed with a screw bore (121), and that
each of the two drive shafts (141) has a threaded distal end screwed into the respective screw bore (121) of the crank (12) to secure each of the drive shafts (141) to the crank (12).

10. The pedalling device in accordance with claim 1,
**characterized in that**
the outer part of each of the ratchet wheels (40) has an inner wall formed with a plurality of locking grooves (430), and that
each of the ratchet wheels (40) further includes a plurality of oneway detents (44) each having a first end pivotally mounted on the inner part and a second end engaged in the respective locking groove.

## Patentansprüche

1. Pedalvorrichtung, umfassend:
eine Halteaufnahme (13);
eine Drehachse (111), die an einem ersten Ende der Halteaufnahme (13) drehbeweglich gelagert ist;
ein Kettenrad (11), das an der Drehachse (111) befestigt ist und von dieser gedreht wird;
zwei einander gegenüberliegende Sperrräder (40), die jeweils auf der Drehachse (111) gelagert sind, um die Drehachse (111) zu drehen;
zwei einander gegenüberliegende Antriebselemente (30), die jeweils ein erstes Ende, das mit einer Sperrradhülse (31) ausgebildet ist, die auf ein jeweiliges Sperrrad (40) aufgesetzt ist, um das jeweilige Sperrrad (40) in nur einer Richtung zu drehen, und ein zweites Ende aufweisen, das mit einer längserstreckten Gleitschiene (35) ausgebildet ist;
eine Kurbel (12), die drehbeweglich auf einem zweiten Ende der Halteaufnahme (13) gelagert ist;
zwei einander gegenüberliegende Antriebsachsen (141), die an zwei entgegengesetzten Seiten der Kurbel (12) befestigt sind, um die Kurbel (12) zu drehen;
zwei Pedale (14), die jeweils drehbeweglich auf einer entsprechenden Antriebsachse (141) gelagert sind; und
zwei einander gegenüberliegende Gleitaufnahmen (50), die jeweils drehbeweglich auf eine entsprechende Antriebsachse (141) aufgesetzt sind, um sich gemeinsam mit dieser zu bewegen, und die jeweils gleitbeweglich in die Gleitschiene (35) eines entsprechenden Antriebselements (30) eingesetzt sind;
**dadurch gekennzeichnet, dass** die Drehachse (111) zwei einander entgegengesetzte Enden aufweist, die jeweils mit einem Befestigungsbolzen (112) und einem Gewinde (113) ausgebildet sind, dass jedes der Sperrräder (40) einen Innenabschnitt (45), der mit einer Befestigungsbohrung (42) ausgebildet ist, die auf dem Befestigungsbolzen (112) der Drehachse (111) gesichert ist, um die Drehachse (111) zu drehen, und einen Außenabschnitt (43) aufweist, der drehbeweglich auf den Innenabschnitt (45) aufgesetzt ist und
eine mit einer Antriebsverzahnung (41) ausgebildete Außenwand aufweist, dass die Sperrradhülse (31) von jedem der Antriebselemente (30) eine mit einer Antriebsverzahnung (311) ausgebildete Innenwand aufweist, die mit der Antriebsverzahnung (41) des entsprechenden Sperrrads kämmt, um das entsprechende Sperrrad (40) zu drehen.

2. Pedalvorrichtung nach Anspruch 1, **dadurch gekennzeichnet, dass** die Befestigungsbolzen (112) sechseckig sind und die Befestigungsbohrungen (42) sechseckig sind.

3. Pedalvorrichtung nach Anspruch 2, **dadurch gekennzeichnet, dass** die Pedalvorrichtung außerdem zwei Unterlagscheiben (37), die jeweils auf ein entsprechendes Gewinde (113) der Drehachse (111) aufgesetzt sind und jeweils auf einem entsprechenden Sperrrad (41) gelagert sind, und zwei Muttern (34) umfasst, die jeweils auf ein entsprechendes Gewinde (113) der Drehachse (111) aufgeschraubt sind und auf einer entsprechenden Unterlagscheibe (37) aufliegen.

4. Pedalvorrichtung nach Anspruch 2, **dadurch gekennzeichnet, dass** die Sperrradhülse (131) von jedem der Antriebselemente (30) mit dem zugeordneten Sperrrad (40) über zwei einander gegenüberliegende Dichtungsringe (32) miteinander verbunden ist.

5. Pedalvorrichtung nach Anspruch 4, **dadurch gekennzeichnet, dass** sich die Dichtungsringe (32) auf zwei gegenüberliegenden Seiten der Sperrradhülse (31) von jedem der Antriebselemente (30) befinden und mittels einer Mehrzahl von Nieten (33) befestigt sind.

6. Pedalvorrichtung nach Anspruch 1, **dadurch gekennzeichnet, dass** jede der beiden Gleitaufnahmen (50) ein erstes Ende, das mit zwei Lagern (51) versehen ist, die gleitbeweglich in die Gleitschiene (35) des zugeordneten Antriebselements (30) eingesetzt sind, und ein zweites Ende aufweist, das mit einer Hülse (52) zum Lagern von zwei zweiten Lagern (53) versehen sind, die jeweils drehbeweglich auf der zugeordneten Antriebsachse (141) gelagert sind.

7. Pedalvorrichtung nach Anspruch 6, **dadurch gekennzeichnet, dass** die ersten Lager (51) von jeder der beiden Gleitaufnahmen (50) hinsichtlich ihrer Bewegungsfreiheit in der Gleitschiene (32) des zugeordneten Antriebselements (30) durch eine Endkappe (36) begrenzt sind, die auf ein offenes Ende der Gleitschiene (35) aufgesetzt ist, um zu verhindern, dass die ersten Lager (51) von jeder der beiden Gleitaufnahmen (50) sich von der Gleitschiene (35) des zugeordneten Antriebselements (30) lösen.

8. Pedalvorrichtung nach Anspruch 1, **dadurch gekennzeichnet, dass** das zweite Ende der Halteaufnahme (13) mit einer Drehbohrung (131) ausgebildet ist und dass die Kurbel (12) drehbeweglich in der Drehbohrung (131) der Halteaufnahme (13) gelagert ist.

9. Pedalvorrichtung nach Anspruch 1, **dadurch gekennzeichnet, dass** jede der beiden Seiten der Kurbel (12) ein distales Ende mit einer Gewindebohrung (121) aufweist und dass jede der beiden Antriebsachsen (141) ein mit einem Gewinde versehenes distales Ende aufweist, das in die zugordnete Gewindebohrung (121) der Kurbel (12) geschraubt ist, um jede der Antriebsachsen (141) an der Kurbel (12) zu befestigen.

10. Pedalvorrichtung nach Anspruch 1, **dadurch gekennzeichnet, dass** der Außenabschnitt von jedem der Sperrräder eine Innenwand aufweist, die mit einer Mehrzahl von Verrastungsnuten (430) ausgebildet ist, und dass jedes der Sperrräder (40) außerdem eine Mehrzahl von Einrichtungs-Sperrklinken (44) aufweist, die jeweils ein erstes Ende, das drehbeweglich auf dem Innenabschnitt gelagert ist, und ein zweites Ende aufweisen, das in die zugeordnete Verrastungsnut eingreift.

## Revendications

1. Un dispositif de pédalier, comportant:
un siège de support (13) ;
un arbre rotatif (111), monté en rotation sur une première extrémité du siège de support (13) ;
une roue à chaîne (11), fixée et mise en rotation par l'arbre rotatif (111) ;
deux roues à cliquet unidirectionnelles opposées (40), chacune montée sur l'arbre rotatif (111) pour la rotation de l'arbre rotatif (111) ;
deux membres d'entraînement opposés (30), ayant chacun une première extrémité disposée avec une douille à cliquet (31), montée sur une roue à cliquet respective (40) pour la rotation de manière unidirectionnelle de la roue à cliquet respective (40) et une seconde extrémité formée avec une glissière allongée (35) ;
une bielle (12), montée de manière rotative sur une seconde extrémité du siège de support (13) ;
deux arbres d'entraînement opposés (141), disposés sur deux côtés opposés de la bielle (12) pour sa mise en rotation (12) ;
deux pédales (14) montées chacune en rotation sur un arbre d' entraînement respectif (141) ; et
deux supports de coulisseaux opposés (50) chacun monté de manière pivotante sur un arbre d' entraînement respectif pour un déplacement solidaire de celui-ci et
monté chacun de manière coulissante sur la glissière (35) d'un membre d' entraînement respectif (30);
**caractérisé en ce que** l'arbre rotatif (111) a deux extrémités opposées formée chacune avec un tenon de fixation (112) et une tige filetée (113), **en ce que** chacune des roues à cliquet (40) comporte une partie intérieure (45) formée avec un trou de fixation (42) fixé sur le tenon de fixation (112) de l'arbre rotatif (111) pour la rotation de l'arbre rotatif (111) et une partie extérieure (43) montée de manière rotative sur la partie intérieure (45) et ayant une paroi extérieure formée avec un engrenage d'entraînement (41), **en ce que** la douille à cliquet (31) de chacun des membres d'entraînement (30) dispose d'une paroi intérieure formé à dents d'entraînement (311) engrenant avec un élément à dents entraîné (41) de la roue à cliquet respective (40) pour la rotation de la roue à cliquet respective (40).

2. Le dispositif de pédalier selon la revendication 1, **caractérisé en ce que** les tenons de fixation (112) sont hexagonaux, et **en ce que** les trous de fixation (42) sont hexagonaux.

3. Le dispositif de pédalier selon la revendication 2, **caractérisé en ce que** le dispositif pédalier comporte en outre deux rondelles (37) montée chacune sur une tige filetée respective (113) de l'arbre de rotation (111) et chacune reposé sur une roue à cliquet respective (40) et de deux écrous (34) vissés chacun sur une tige filetée respective (113) de l'arbre rotatif (111) et chacun disposé sur une rondelle respective (37).

4. Le dispositif de pédalier selon la revendication 2, **caractérisé en ce que** la douille à cliquet (31) de chacun des membres d'entraînement (30) est combinée avec la roue à cliquet respective (40) par deux bagues d'étanchéité opposées (32).

5. Le dispositif de pédalier selon la revendication 4, **caractérisé en ce que** les bagues d'étanchéité (32) sont disposées sur deux côtés opposés de la douille à cliquet (31) de chacun des membres d'entraînement (30) et sont fixés au moyen d'une pluralité de rivets (33).

6. Le dispositif de pédalier selon la revendication 1, **caractérisé en ce que** chacun des supports de coulisseaux (50) dispose d'une première extrémité équipée des deux premiers roulements (51) montés de manière coulissante dans la glissière (35) du membre d'entraînement respectif (30) et une deuxième extrémité équipée avec un manchon (52) pour monter deux roulements secondaires (53) qui sont montés de manière rotative sur l'arbre d'entraînement respectif (141).

7. Le dispositif de pédalier selon la revendication 6, **caractérisé en ce que** les premiers roulements (51) de chacun des supports de coulisseaux (50) sont limités par la glissière (35) du membre d'entraînement respectif (30) par une capsule de coulisse (36) qui est montée sur une extrémité ouverte de la glissière (35) afin d' empêcher les premiers roulements (51) de chacun des sièges de coulisse (50) d'être libérés de la glissière (35) du membre d'entraînement respectif (30).

8. Le dispositif de pédalier selon la revendication 1, **caractérisé en ce que** la deuxième extrémité du siège de support (13) est formée avec un trou de pivot (131), et **en ce que** la bielle (12) est montée de manière pivotante dans le trou de pivot (131) du siège de support (13).

9. Le dispositif de pédalier selon la revendication 1, **caractérisé en ce que** chacune des deux côtés de la bielle (12) dispose d'une extrémité distale formée avec un alésage de vis (121), et **en ce que** chacun des deux arbres d'entraînement (141) a une extrémité distale filetée vissée dans l'alésage de vis respectif (121) de la bielle (12) pour fixer chacun des arbres d'entraînement (141) à la bielle (12).

10. Le dispositif de pédalier selon la revendication 1, **caractérisé en ce que** la partie extérieure de chacune des roues à cliquet (40) dispose d'une paroi intérieure formée avec une pluralité de rainures de blocage (430), et **en ce que** chacune des roues à cliquet (40) inclut en outre une pluralité des encliquetages unidirectionnels (44) ayant chacun une première extrémité montée de manière pivotante sur la partie intérieure et une deuxième extrémité engagée sur le rainure de blocage respectif.
